# EUROPEAN PATENT SPECIFICATION

(11) **EP 0 496 904 B1**
(45) Date of publication and mention of the grant of the patent: **04.01.1995**
(21) Application number: 91101031.2
(22) Date of filing: 26.01.1991
(51) Int. Cl.: F16B 43/02, F16B 2/06, E01B 9/32, E04B 1/58

(54) **Clamping device for profiled bars or the like**
Klemmvorrichtung für Profilstangen oder dergleichen
Dispositif de serrage pour barres profilées ou similaires

(43) Date of publication of application: 05.08.1992
(73) Proprietor: ERICO GMBH, D-66851 Schwanenmühle (DE)
(72) Inventor: Engelbarts, Marinus, W-6751 Geiselberg (DE); Nussbaum, Paul, W-4010 Hilden (DE)
(74) Representative: Türk, Gille, Hrabal, Leifert

(56) References cited:
- DE-C- 459 076
- DE-U- 8 612 392
- GB-A- 411 400
- GB-A- 480 517
- US-A- 667 090
- US-A- 2 253 241

## Description

The invention relates to a device for clamping profiled bars or the like, for instance, to other profiled bars, to ceilings, walls and similar parts, said device comprising a block-like claw to be positioned on a flange or the like of the article to be clamped, and further comprising at least one clamping bolt which can be put into a hole provided in said claw.

In a known clamping device of this kind (GB-A-411 400) a hook-like adapter is arranged on a headed bolt thus that it can be positioned on the plane surface of a flange having parallel surfaces for clamping purposes. The hook-like adapter or block-like claw has in its upper side a rectangular recess for receiving the hexagonal head of the bolt to avoid that the claw can be turned when the bolt is fastened since otherwise there would be the risk that the claw looses its desired clamping position. However, for fastening the bolt an opposing nut must be provided since no rotational movement of the head bolt relative to the hook-like adapter or claw is possible. The clamping surface of the block-like claw extends in a plane radial to the axis of the hole for receiving the clamping bolt.

A further disadvantage of this prior art clamping device resides in the fact that this clamping device can be used only with profiled bars having flat flanges since if the surface of the flange would be inclined only a line contact between the clamping surface of the claw and the inclined surface of the flange would occur.

A known hanger comprises a clamping device having an U-shaped bracket with two parallel flanges into which a clamping bolt can be screwed, the one flange having a thread hole wich is perpendicular to the longitudinal extension of the respective flange while the other flange comprises an inclined thread hole in order that the clamping bolt can be positioned in an inclined arrangement if the one surface of the flange to be clamped is inclined (DE-U-86 12 392). However, this known clamping device does not use a compact claw as clamping element but a rather complicated and not sufficiently stable clamping element.

The object of the present invention is to provide a clamping device and system for clamping profiled bars or the like which can effectively be used with profiled bars having flanges of all types and which provides a simple but effective lock against not desired rotational movement between the bolt in the respective claw without being an obstacle against turning said bolt for fastening and loosing purposes. In addition, this clamping device and system should be simple and sturdy per se.

In accordance with the present invention the claws of the clamping device or system each have two different working, operation or clamping surfaces provided on opposite sides of said claw so that for clamping flanges having a flat or planer surface the one said two clamping surfaces and for clamping flanges having an inclined surface the opposing clamping surface of the respective claw is used. The user of this device needs only to put the claw in the correct position onto said bolt. Accordingly, a very simple device for multi-functional clamping purposes is provided.

By providing circular or circumferential ratchets around the through hole of each claw a very effective lock between the bolt and the claw can be obtained which lock is not due to a positive engagement between both parts so that relative rotational movements for fastening the bolt of the clamping device are possible.

These and other features, objects and advantages of the present invention will become apparent from the following description of the drawings and from the claims.

In the drawings, a preferred embodiment of a clamping device comprising the features of the present invention is schematically shown, wherein
- Fig. 1: is a vertical section of the clamping device clamping two articles together of which one has an inclined surface,
- Fig. 2: is a side elevation of the clamping device of Fig. 1, which, however, interconnects two articles both having parallel and plane surfaces,
- Fig. 3: is a side elevation of a block-like claw of the clamping device,
- Fig. 4: is a plan view of the claw of Fig. 3 showing the one of two opposed clamping surfaces of said claw,
- Fig. 5: is a further plan view of the claw showing the opposite side or operation surface of said claw,
- Fig. 6: is a front face view of the claw shown in Figs. 3 to 5,
- Fig. 7: is a sectional view of a spacer of the clamping device,
- Fig. 8: is a plan view of the spacer of Fig. 7,
- Fig. 9: is a sectional view of another spacer of the clamping device,
- Fig. 10: is a plan view of the spacer of Fig. 9,
- Fig. 11: is a vertical section of a modified clamping device,
- Fig. 12: is a side elevation of an additional washer or disc used with the clamping device of Fig. 11 and
- Fig. 13: is a plan view of the disc shown in Fig. 12.

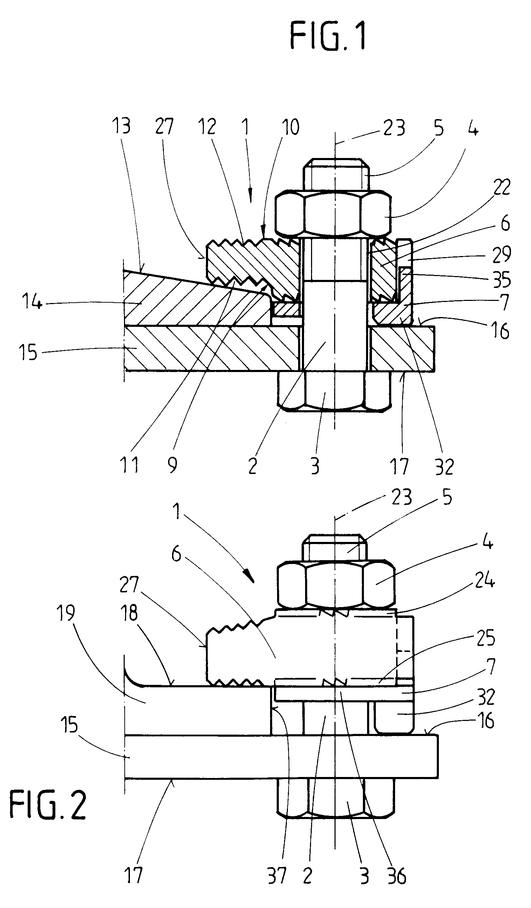

A clamping device (1) for clamping two members or articles together comprises in accordance with Figs. 1 and 2 a bolt (2) having an integral hexagonal head (3), a hexagonal nut (4) fitting with and screwed onto the threaded end (5) of said bolt (2), further a block-like claw (6) and a spacer (7) both fitting with and arranged on said bolt (2) between its hexagonal head and the nut screwed onto the threaded end (5) of said bolt (2), as shown in particular in Fig. 1.

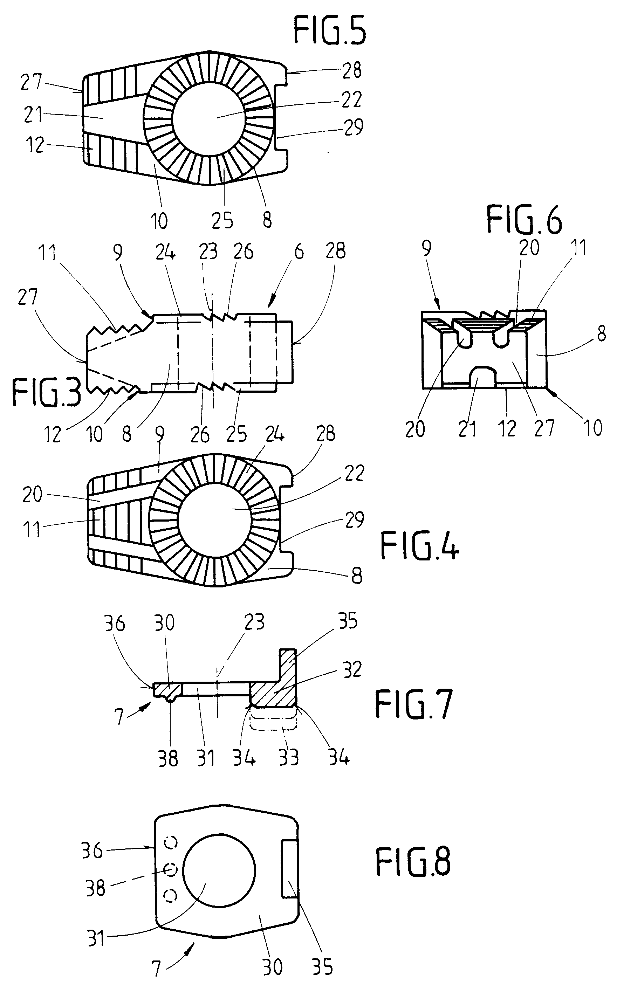

As to be understood in particular from Figs. 3 to 6, the claw (6) is a substantially rectangular block (8) comprising of metal, for instance cast iron. Said block (8) has two working or operation surfaces (9) and (10) arranged on opposite sides of said block so that claw (6) can be positioned in two different positions on bolt (2), as can be understood from Figs. 1 and 2.

In the arrangement of Fig. 1 claw (6) is positioned thus that its working surface (9) having an inclined indented contact surface (11) is arranged below so that the inclined contact surface (11) contacts the inclined upper surface (13) of a flange (14) of an article like a rolled beam or another article not shown in detail in the drawings. Accordingly, claw (6) is thus arranged that its contact surface (11) more or less fits with the upper surface (13) of the article to be clamped to an other article like a plate (15) having parallel upper and lower surfaces (16) and (17), respectively.

In the arrangement of Fig. 2, claw (6) is in a position inverse to that of Fig. 1 so that its working face (10) having a horizontal indented contact surface (12) contacts the horizontal upper surface (18) of a flange (19) having parallel upper and lower surfaces of an article not shown in detail in the drawings in order to clamp said flange (19) to the upper surface (16) of plate (15).

For a simple identification of both operation or working sides of claw (6) the contact surfaces (11) and (12) are provided with grooves (20) and (21), respectively, of different number, orientation and cross section. While the inclined indented contact surface (11) is provided with two grooves (20) of even cross section but arranged in an oblique position to one another, the horizontal indented contact surface (12) is provided with a single central groove (21) the cross section thereof increasing to the centre of claw (6), as shown in Fig. 5. This larger groove (21) can also be used to receive information indications at its bottom relating to the size or type of the particular claw (6).

The main portion of the block-like claw (6) contains a through hole (22), the central axis (23) of which extends perpendicular to the working surfaces (9) and (10) of claw (6). The internal diameter of the through hole (22) is adapted to the diameter of bolt (2) and is slightly larger than the diameter of bolt (2), as shown in Fig. 1.

At each end of the through hole a circular ratchet (24) and (25), respectively, is provided around the through hole (22) which serves as contact surface for nut (4), as shown in Fig. 1. These ratchets serve as locks for the tightened nut (4) to avoid that this nut can be losened under external influence like vibration. The individual dents (26) have a clockwise orientation for a right-handed thread of bolt (2), as shown in the drawings.

At the end comprising the contact surfaces (11) and (12) claw (6) is provided with a flat face (27), and the grooves (20) and (21) extend to this flat face, as shown in particular in Fig. 6. The opposing end face (28) of claw (6) comprises a groove-like key seat (29) extending over the entire thickness or height of claw (6) parallel to axis (23) and is open to the end face (28). This key seat serves to receiving a key element as described below.

In accordance with Figs. 1 and 2, the block-like claw (6) can be supported on plate (15) by means of the spacer (7). This spacer (7) has, as shown in particular in Figs. 7 and 8, a plate-like main body (30) of generally speaking rectangular configuration. In the center of said main body (30) a through hole (31) is provided, the internal diameter of which corresponds to the internal diameter of through hole (22) of claw (6). Accordingly, spacer (7) can be arranged on bolt (2), as shown in Fig. 1.

At the rear end of the plate-like main body (30) of spacer (7) a projection (32) is provided for supporting spacer (7) on the upper surface (16) of plate (15), as shown in Figs. 1 and 2. In Fig. 7 dotted lines (33) indicate that projection (32) can have different heights in order to adapt the clamping device (1) to different practical applications.

For instance, in Fig. 1 a spacer (7) having a relatively low projection (32) is used while Fig. 2 shows the use of a relatively high projection (32) on spacer (7). In accordance with Fig. 7 three different spacers (7) are provided for different applications and having accordingly different heights.

The projections (32) have, independent of their particular height, rounded corners (34) to avoid that such corners can produce indentations in the upper surface (16) of plate (15) if spacer (7) is not arranged in an absolutely horizontal but rather in a more or less inclined position.

At the rear end of the main body (30) of spacer (7) an upwardly extending tongue (35) is provided which serves as a key and fits into key seat (29), as can be taken in particular from Fig. 1. If tongue (35) is arranged in the groove-like key seat (29) relative rotation between claw (6) and spacer (7) is not possible.

The end (36) of main body (30) of spacer (7) which is opposit to tongue (35) has a flat face configuration as can be taken in particular from Fig. 8. This end (36) extends nearly until the face end (37) of flange (19) or flange (14) so that rotational movement of the combined claw (6) and spacer (7) is avoided by contact between end (36) and face end (37) when nut (4) is tightened. Thus, claw (6) cannot be turned out of alignment with flange (14) or (19), respectively, when nut (4) is tightened but is pressed in the desired position against the surface (13) or (18), respectively, of flange (14) or (19), respectively, which should be secured to plate (15).

Near the end (36) of the main body (30) of spacer (7) said spacer (7) is provided with lugs (38) extending to the lower side of said spacer, the number of said lugs being an indication to the size of the projection (32) of said spacer (7). The spacer (7) having the lowest projection has only one lug and the spacer having the highest projection has three lugs. Therefore, the user of such clamping device can easily determine which type or size of spacer he/she has in hand.

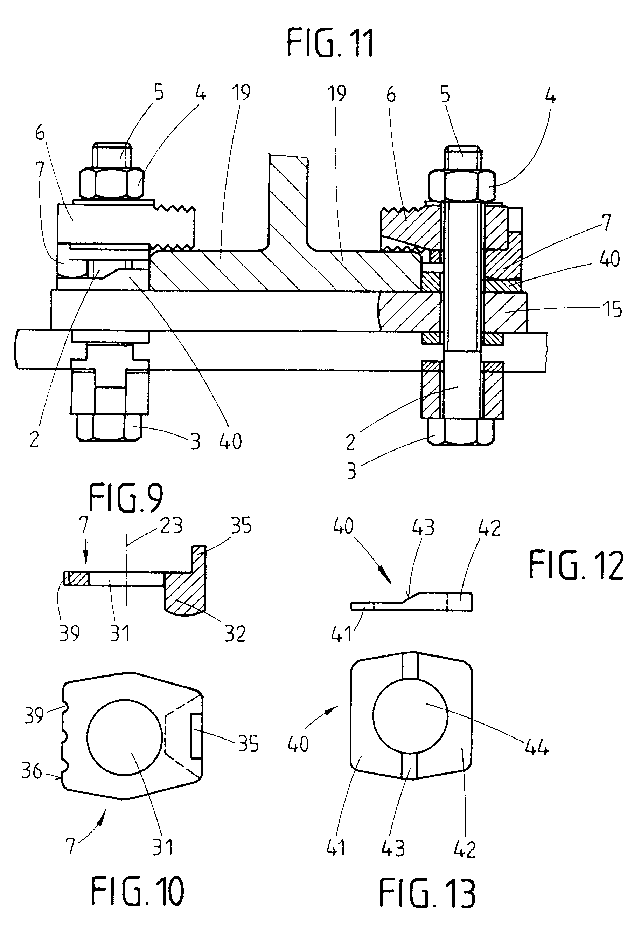

Instead of lugs (38) such spacer (7) can be provided at its end face (36) with grooves (39) as can be taken from Figs. 9 and 10.

As can be taken from Fig. 11 a further washer or disc (40) can be arranged below spacer (7) for the event that such spacer (7) does not have a sufficient height or thickness. Such disc (40) has two portions (41, 42) of different thickness as can be taken in particular from Fig. 12 so that such disc can equalize different heights if arranged in its one or its other position. In Fig. 11 the lower or thinner portion (41) of disc (40) is arranged below projection (32) of spacer (7). If disc (40) would be turned about its central axis for an angle of 180° the portion (42) of higher thickness would support spacer (7) so that claw (6) would be in a more elevated position.

As shown in Figs. 12 and 13, both portions (41, 42) of disc (40) are interconnected by an inclined surface (43). Disc (40) is provided with a central hole (44) through which bolt (2) fits as can be understood from Fig. 11.

## Claims

1. Device for clamping profiled bars or the like, for instance, to other profiled bars to ceilings, walls and similar parts, said device comprising a block-like claw (6) to be positioned on a flange or the like of the article to be clamped, and further comprising at least one clamping bolt (2) which can be put into a hole (22) provided in said claw, said claw (6) having two different clamping surfaces (9, 11 and 10, 12) provided on opposite sides of the claw (6), the clamping surface (12) on one side of the claw (6) extending in a first plane radial to the longitudinal axis (23) of said hole (22) of the claw (6), and the clamping surface (11) on the opposite side of the claw (6) extending inclined from a second plane radial to the longitudinal axis (23) of said hole (22) of said claw (6) and towards said first radial plane.

2. Device as claimed in claim 1, characterized in that both clamping surfaces (9 and 10) of said claw (6) in which said through hole (22) ends are parallel to one another and extend each in one of said two radial planes.

3. Device as claimed in claim 1 or 2, characterized in that each clamping surface (11 and 12) has a profiled or indented surface.

4. Device as claimed in one of claims 1 to 3, characterized in that each clamping surface (9 and 10) comprises at least one indentation like a groove (20 or 21) extending in longitudinal direction of said claw (6), wherein the number and/or the cross-section of grooves provided in both clamping surfaces is different.

5. Devices claimed in one of claims 1 to 4, characterized in that both clamping surfaces (9 and 10) comprise around the through hole (22) a circular or circumferential ratchet (24, 25) on which a part of said clamping bolt (2, 3, 4) can be supported.

6. Device as claimed in claim 5, characterized in that the dents (26) of said circular ratchets (24, 25) have a clockwise orientation for clamping bolts having a right-handed thread.

7. Device as claimed in one of claims 1 to 6, characterized in that it comprises at least one spacer (7) to be arranged below said claw (6), which spacer has a hole (31) for receiving the clamping bolt (2) and furthermore has an end face (36) on its periphery.

8. Device as claimed in claim 7, characterized in that said spacer (7) has at its periphery opposite to said end face (36) a projecting tongue (35) which fits into a key seat (29) provided at the rear side of the claw (6).

9. Device as claimed in claim 7 or 8, characterized in that the spacer (7) is provided with a support or projection (32) of variable height, the corners (34) thereof being rounded.

10. Device as claimed in one of claims 7 to 9, characterized in that the spacer (7) is provided with indicating means (38; 39) for marking the particular height of its projection (32).

11. Device as claimed in one of claims 1 to 10, characterized in that a disc (40) having two portions (40, 41) of different thicknesses is to be arranged below said spacer (7) and/or said claw (6).

## Patentansprüche

1. Klemmvorrichtung für Profilstangen od.dgl., wie zum Beispiel für deren Verbindung mit anderen Profilstangen an Decken, Wänden oder ähnlichen Teilen, enthaltend eine blockartige Klaue (6), welche an einem Flansch od.dgl. des zu verklemmenden Elementes angeordnet wird, außerdem enthaltend mindestens eine Spannschraube (2), welche in eine in der Klaue vorgesehene Bohrung (22) eingesetzt werden kann, wobei die Klaue (6) zwei unterschiedliche Klemmflächen (9, 11; 10, 12) aufweist, welche an den gegenüberliegenden Enden der Klaue (6) vorgesehen sind, wobei sich die Klemmfläche (12) auf einer Seite der Klaue (6) in einer ersten Ebene radial zu der Längsachse (23) der Bohrung (22) in der Klaue (6) erstreckt, während sich die Klemmfläche (11) auf der gegenüberliegenden Seite der Klaue (6) geneigt aus einer zweiten Ebene radial zu der Längsachse (23) der Bohrung (22) in der Klaue (6) gegen die erste radiale Ebene erstreckt.

2. Vorrichtung nach Anspruch 1,
**dadurch gekennzeichnet**, **daß**
beide Klemmflächen (9, 10) der Klaue (6), in die die Bohrung (22) mündet, parallel zueinander angeordnet sind und sich jeweils in den beiden radialen Flächen erstrecken.

3. Vorrichtung nach einem der Ansprüche 1 oder 2,
**dadurch gekennzeichnet**, **daß**
jede der Klemmflächen (11, 12) eine profilierte oder verzahnte Oberfläche aufweist.

4. Vorrichtung nach einem der Ansprüche 1 bis 3,
**dadurch gekennzeichnet**, **daß**
jede Klemmfläche (9, 10) mindestens eine Vertiefung wie eine Nut (20, 21) aufweist, welche sich in Längsrichtung der Klaue (6) erstreckt, wobei die Anzahl und/oder der Querschnitt der in beiden Klemmflächen vorgesehenen Nuten unterschiedlich ist.

5. Vorrichtung nach einem der Ansprüche 1 bis 4,
**dadurch gekennzeichnet**, **daß**
beide Klemmflächen (9, 10) um die Bohrung (22) eine kreisförmige oder umlaufende Ratsche (24, 25) aufweisen, an der ein Teil der Klemmschraube (2, 3, 4) gehalten werden kann.

6. Vorrichtung nach Anspruch 5,
**dadurch gekennzeichnet**, **daß**
die Verzahnungen (26) der kreisförmigen Ratschen (24, 25) im Uhrzeigersinn ausgerichtet sind, um Schrauben zu verklemmen, die ein Rechtsgewinde aufweisen.

7. Vorrichtung nach einem der Ansprüche 1 bis 6,
**dadurch gekennzeichnet**, **daß**
sie mindestens ein Abstandsstück (7) aufweist, welches unter der Klaue (6) angeordnet wird, wobei dieses Abstandsstück eine Bohrung (31) aufweist, um den Klemmbolzen (2) aufzunehmen, und dadurch, daß sie weiterhin eine Endfläche (36) an ihrer Peripherie aufweist.

8. Vorrichtung nach Anspruch 7,
**dadurch gekennzeichnet**, **daß**
das Abstandsstück (7) an seiner Peripherie gegenüber der Endfläche (36) mit einer vorstehenden Zunge (35) ausgerüstet ist, welche in einen Keilsitz (29) eingreift, der an der Rückseite der Klaue (6) vorgesehen ist.

9. Vorrichtung nach einem der Ansprüche 7 oder 8,
**dadurch gekennzeichnet**, **daß**
das Abstandsstück (7) mit einer Halterung oder einem Vorsprung (32) variabler Höhe ausgerüstet ist, dessen Kanten abgerundet sind.

10. Vorrichtung nach einem der Ansprüche 7 bis 9,
**dadurch gekennzeichnet**, **daß**
das Abstandsstück (7) mit Indexierungsmitteln (38; 39) ausgerüstet ist, um die jeweilige Höhe des Vorsprungs (32) zu markieren.

11. Vorrichtung nach einem der Ansprüche 1 bis 10,
**dadurch gekennzeichnet**, **daß**
eine Scheibe (40) aus zwei Teilen (40, 41) unterschiedlicher Dicke unter dem Abstandsstück (7) und/oder unter der Klaue (6) angeordnet wird.

## Revendications

1. Dispositif pour le serrage de barres profilées ou similaires, comme par exemple à d'autres barres profilées ou des plafonds, des murs ou des éléments similaires, ledit dispositif comprenant une machoire (6) sous forme d'un bloc positionnée sur une bride ou un dispositif similaire de l'élément à serrer, et comprenant également au moins un boulon de serrage (2) pouvant être vissé dans un alésage (22) prévu dans ladite machoire, cette machoire (6) étant pourvue de deux surfaces de serrage différentes (9, 11; 10, 12) positionnées sur les cotés opposés de ladite machoire (6), la surface de serrage (12) disposée sur l'un des cotés de la machoire (6) s'étendant dans un premier plan radial par rapport à l'axe longitudinal (23) dudit alésage (22) de la machoire (6), tandis que la surface de serrage (11) du coté opposé de la machoire (6) est inclinée à partir d'un deuxième plan radial vers l'axe longitudinal (23) dudit alésage (22) de ladite machoire (6) et vers le premier plan radial.

2. Dispositif suivant la revendication 1,
**caractérisé en ce que**
les deux surfaces de serrage (9, 10) de ladite machoire (6) dans laquelle débouche ledit alésage (22) sont disposées parallèlement l'une par rapport à l'autre et s'étendent chacune dans l'un des deux plans radiaux.

3. Dispositif suivant l'une des revendications 1 ou 2,
**caractérisé en ce que**
chacune des surfaces de serrage (11, 12) comporte une surface profilée ou dentée.

4. Dispositif suivant l'une des revendications 1 à 3,
**caractérisé en ce que**
chacune des surfaces de serrage (9, 10) comporte au moins un évidement tel qu'une rainure (20, ou 21) laquelle s'étend en direction longitudinale de ladite machoire (6), et dans lequel la section et/ou le nombre des rainures prévues dans les deux surfaces de serrage est différent.

5. Dispositif suivant l'une des revendications 1 à 4,
**caractérisé en ce que**
les deux surfaces de serrage (9, 10) comportent disposé autour de l'alésage (22) un cran circulaire ou circonférentiel (24, 25) pouvant reprendre une partie dudit boulon de serrage (2, 3, 4).

6. Dispositif suivant la revendication 5,
**caractérisé en ce que**
les dents (26) desdits crans circulaires (24, 25) sont disposés dans le sens horaire pour serrer des boulons pourvus d'un pas à droite.

7. Dispositif suivant l'une des revendications 1 à 6,
**caractérisé en ce que**
il comprend au moins une entretoise (7) disposé en-dessous de ladite machoire (6), ladite entretoise comportant un perçage (31) pour recevoir le boulon de serrage (2) et comportant également une extrémité (36) sur sa périphérie.

8. Dispositif suivant la revendication 7,
**caractérisé en ce que**
ladite entretoise comporte sur sa périphérie opposée à ladite extrémité (36) une projection (35) s'encastrant dans une cannelure (29) prévue sur la face arrière de la machoire (6).

9. Dispositif suivant l'une des revendications 7 ou 8,
**caractérisé en ce que**
l'entretoise (7) est pourvue d'un support ou d'une projection (32) d'une hauteur variable dont les arrêtes sont arrondies.

10. Dispositif suivant l'une des revendications 7 à 9,
**caractérisé en ce que**
l'entretoise (7) est pourvue de moyens d'indexation (38; 39) pour le repérage de la hauteur particulière de la projection (32).

11. Dispositif suivant l'une des revendications 1 à 10,
**caractérisé en ce que**
un disque (40) en deux parties (40, 41) d'épaisseur différente est disposé en-dessous de ladite entretoise (7) et/ou de ladite machoire.
